# EUROPEAN PATENT APPLICATION

(11) **EP 2 541 934 A1**
(43) Date of publication of application: **02.01.2013**
(21) Application number: 11172396.1
(22) Date of filing: 01.07.2011
(51) Int. Cl.: H04N 7/24

(54) **A method for playing repeatable events on a media player**

(71) Applicant: Nagravision S.A., 1033 Cheseaux-sur-Lausanne (CH)
(72) Inventor: LE PELERIN, Alain, 1020 Renens (CH)
(74) Representative: Leman Consulting S.A.

(57) **Abstract**

An embodiment of the present invention may be deployed in a personal video player/recorder to save on computing resources and communication bandwidth use whenever a repeatable event such as an advertisement is to be broadcast. According to the invention the personal video player has advertisement content preloaded into its event memory along with a corresponding unique identifier. An encrypted tag is broadcast along with an event along with a flag indicating that the next event is a repeatable event. Upon detection of the tag it is decrypted to reveal the unique identifier of a repeatable event. If an event with that unique identifier is found in the event memory, then that event is played from the event memory rather than from the broadcast.

## Description

### TECHNICAL DOMAIN

The present invention relates to the domain of the delivery of digital media to digital media players and is especially applicable to a pay TV environment where the digital media is received from a distribution network in encrypted format and is viewable subject to the payment of a fee.

### STATE OF THE ART

The delivery of advertising content to digital media players has been described in the prior art in the field of digital broadcasting. For example, International Patent Application Publication number WO 2009/152 447 A2 describes a method for controlling the display of advertising material along with other content on a mobile device. The method involves pre-loading advertisements on the mobile device. The advertisements are selected during playback of the other content thanks to a special tag comprising an instruction to load a particular advertising segment. The invention described in this document is targeted at solving a problem of providing targeted and high-impact advertising material for viewing on a mobile device along with content which is requested by the user of the device, since no standard previously existed for this.

In United States Patent Application Publication number US 2007/0 294 722 A1 a method is described for displaying a previously stored advertisement during a broadcast. The aim of this invention is to maximize the effect of an advertisement by selectively delivering appropriate advertisements to a particular user during a commercial time between regular programs and is particularly adapted to personal video players. Indeed according to one embodiment of the invention described herein, the displaying of a particular advertisement may be conditioned upon the particular location of the (mobile) device at a particular time. According to another embodiment it is the particular user identity which conditions which adverts are shown.

United States Patent number US 6 810 527 B1 describes a system for the distribution of content for display on a reception/viewing apparatus. In this system pseudo-live content or pre-recorded content (including advertisements) can be displayed. The system is particular adapted for the distribution of content delivered via satellite and ground-based infrastructures to aircraft passengers on commercial aircraft. Although this patent application mainly covers issues dealing with providing global coverage on an aircraft it also deals with issues concerning the management of the display of live and pre-recorded content. The invention deals with issues such as identification of which content should be delivered to which aircraft.

### BRIEF SUMMARY OF THE INVENTION

In view of the existing prior art, there remains a need to minimize the bandwidth used in delivering digital media content to digital media players. This is especially true in the domain of mobile or portable media players, where the efficient management of computing resources is required in order to maximize the battery life.

To that end the present invention provides for a media player comprising:
a receiver to receive a digital media transmission from a server via a first channel, said digital media transmission comprising:
   consumable content comprising a plurality of events including at least a current event; and
   a piece of programme specific information;
the media player further comprising:
a decryption module;
an event memory; and
a presentation module to present at least the consumable content;
said media player characterised in that in combination:
the event memory comprises at least one preloaded event being designated as a repeatable event and having a unique identifier;
the piece of programme specific information comprises an encrypted tag comprising a unique identifier of a repeatable event; and
the media player is configured to:
   present at least part of the current event;
   decrypt at least the unique identifier from the encrypted tag;
   retrieve at least part of the repeatable event from the event memory should the decrypted unique identifier match the unique identifier of the preloaded repeatable event or else retrieve at least part of said repeatable event from the server; and present the retrieved event.

The present invention also provides for a method for playing events on a media player comprising a receiver configured to receive a digital media transmission from a server via a first channel, said digital media transmission comprising:
consumable content comprising a plurality of events including at least a current event; and
a piece of programme specific information comprising an encrypted tag including a unique identifier of a repeatable event;
said media player comprising:
a decryption module at least to decrypt the encrypted tag;
an event memory comprising at least one preloaded event, wherein the preloaded event is designated as a repeatable event and has a unique identifier; and
a presentation module to present at least the consumable content;
said method comprising:
presenting at least part of the current event;
decrypting at least the unique identifier from the encrypted tag;
retrieving at least part of the repeatable event from the event memory should the decrypted unique identifier match the unique identifier of the preloaded repeatable event or else retrieving at least part of said repeatable event from the server; and
presenting the retrieved event instead of the current event;
presenting the current event when the retrieved event has terminated.

### BRIEF DESCRIPTION OF THE DRAWINGS

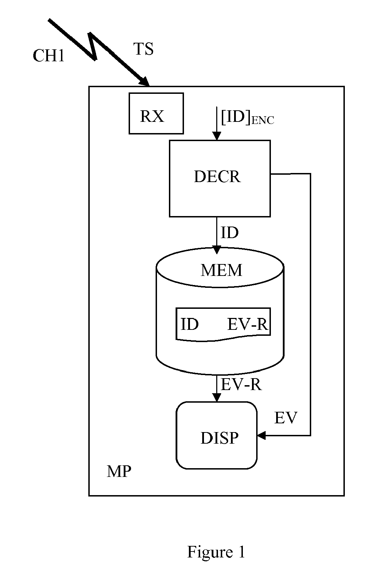

The present invention will be better understood thanks to the detailed description which follows and the accompanying drawings, which are given as non-limiting examples of embodiments of the invention, wherein figure 1 shows a schematic representation of a system within which an embodiment of the present invention may be deployed.

### DETAILED DESCRIPTION

Digital content can be delivered from a distribution centre by a digital content owner to a plurality of consumers equipped with suitable receivers/viewers, otherwise known as media players. The digital content can be moving video content, still image content, audio/video content or audio content. The types of media players associated with the different types of digital content are DVD players, TV sets, display screens, digital radios etc.

The content is may be delivered according to any of a range of predetermined norms or protocols for digital media file transmission or storage. More specifically, in the case where the content is audio/video content, the media files may be delivered as part of a transport stream via a broadcast network or via a network of point-to-point connections. Examples of such connections are cable connections, IP connections, wireless broadcast networks or satellite broadcast networks.

Depending on the type of connection that exists between a particular consumer or user and the content owner, the amount of bandwidth available for such delivery of content may be more or less limited. The protocols for transmitting digital media files involve the inclusion into the media files or transport stream of data over and above the actual consumable content i.e. the content that the viewer or listener will actually see or hear or more generally consume. This means that there is a certain amount of overhead involved in the transmission of digital content. Furthermore, in a situation where the content owner perceives a fee from the viewers of his content, which is very often the case for example in a pay TV environment, there will be even more overhead in the transmission since the content is generally encrypted. The protocols used for this generally end up being even more bandwidth-hungry because of the provisions which have to be made for transmitting rights and cryptographic keys and the like associated with ensuring the security of the encrypted content. This can all add up to rather high demands on precious bandwidth.

As well as being bandwidth-hungry from a communication point of view, the amount of computing power necessary to process the encrypted content is also significant. This means that the computing resources on the media player may become overly solicited. Furthermore, this increased use of computer resources may also result in higher power consumption, which may become problematic in the case where the media player is of a portable or mobile type, where battery lifetime becomes an important issue.

Embodiments of the present invention may be deployed in media players for example, in order to alleviate the demands on bandwidth and demands on use of computing resources by such a device. According to these embodiments of the present invention, beneficial impact on bandwidth and computer resources can be achieved through judicious management of so called repeatable content. An example of repeatable content is advertising content, which may be replayed a number of times by the media player.

According to a first embodiment of the present invention, of which a representation is schematised in Fig.1, a media player (MP) such as digital television unit comprises a receiver (RX), an event memory (MEM), a decryption unit (DECR) and a presentation module in the form of a display (DISP) on which to present the digital media. Other examples of presentation modules include a loudspeaker in the case where the invention is applied to a digital radio broadcast environment. The event memory (MEM) is configured to store at least events which are deemed to be repeatable events (EV-R). Events (EV) in the context of the present invention are films, sports games, quiz shows, sit-coms, advertisements, comedy shows, documentaries etc. and as such, storage of an event (EV) means memorizing the digital content related to that event (EV). In the domain of digital TV for example, digital media data is transmitted in a transport stream (TS) comprising consumable content and meta data including error correction data, encryption related data and other meta data such as programme specific information (see below). The consumable content can include a plurality of different events.

Repeatable events (EV-R) are events (EV) which are susceptible to be broadcast more than once, such as an advertisement event for example. Accordingly, the event memory (MEM) of a media player which is offered for sale is pre-loaded with at least one such repeatable event (EV-R). A unique identifier (ID) corresponding to the repeatable event (EV-R) is also pre-stored in the media player (RX) along with the repeatable event (EV-R) in order that the repeatable event (EV-R) may be called or otherwise referenced.

Events are broadcast or otherwise transmitted by the content owner (SVR) as broadcast content comprising programmed events (EV). The programmed events (EV) may be encrypted and broadcast according to techniques generally known in the art, as part of a data flow or transport stream (TS) for example or in more general terms as part of a digital media file. The transport stream (TS) further comprises programme specific information such as an Event Information Table (EIT). The EIT is used in an MPEG transport stream to provide programme data specific to the current event and for future events, including the event title, the start time, the duration, a description of the event, age rating etc. According to the invention, the EIT further comprises an encrypted piece of information comprising the unique ID of a repeatable event. This piece of information will be referred to as an encrypted tag.

As described above, according to this embodiment of the present invention, the transport stream includes content comprising a programmed event and further includes programme specific information such as the EIT, which comprises the unique ID of a repeatable event in encrypted format, referred to above as an encrypted tag. The receiver may thereby check whether or not the referenced repeatable event is already stored in its event memory.

Upon detection of the encrypted tag, the media player decrypts the encrypted tag to get the unique ID of the repeatable event. The media player then checks whether the repeatable event referenced by the unique ID is already pre-stored in its event memory. If so, then the referenced repeatable event is played, from the event memory, on the media device at the programmed time. In this way resources and bandwidth can be freed up. The freed resources can then of course be utilized for some other purpose if necessary. After the repeatable event has been played the media device then returns to playing the programmed events according to the programme. If the repeatable event referenced by the unique ID is not present in the event memory, then the media player fetches the repeatable event from the content owner and plays it. By fetch it is meant that the media player downloads the event from the server and stores it in its event memory. By fetching the event in this manner the player need not download the same event again should it be referenced in the future. According to one embodiment the download is done via the same channel upon which all broadcast events are received. In this case the absence of the referenced event in the event memory signals the receiver to proceed with the download from the broadcast channel. According to a different embodiment, the download is achieved via a channel which is not the same channel upon which events are broadcast but rather a separate channel upon which the media receives the repeatable event. In this case, upon detection that the referenced event is absent from the event memory the receiver the download of the missing event on the separate channel. The separate channel is generally a bidirectional channel and as such the request and the missing repeatable event can be transmitted via this channel. The broadcast channel on the other hand is generally unidirectional although in some cases (IP connection for example) the broadcast channel can be bidirectional. If the media player has to make a request for the missing event, then it is possible for the server to authenticate the player by using techniques generally known in the industry. If the event needs to be encrypted, then the server can transmit the requested file in a format encrypted for the media player in question using techniques generally known in the industry. Once the repeatable event has been played, the media player generally tunes back to the broadcast channel and continues playing the broadcast event.

An embodiment of the present invention may also be deployed in a system where digital content is requested rather than in the above example where events are broadcast according to a predetermined programme. This is the case in systems known as Video on Demand (VOD). In this type of system, when an event is requested, the content owner transmits the requested event, usually in encrypted format, to the media player. The transmitted transport stream comprises the requested event, usually in encrypted format but not necessarily so, and the EIT, which comprises the encrypted tag with the unique ID of the next repeatable event and an index indicating the end of the repeatable event. The media player decrypts and plays the requested event thereby playing it at the requested time and then decrypts the tag to get the unique ID of the repeatable event. The player then searches for the unique ID in the event library and, if present, plays the corresponding repeatable event at the start time indicated by the EIT. After the time indicated by the index has elapsed, the player then continues playing the requested event from the point where it was interrupted. Again, if the unique ID is not found in the event library, then the player fetches the event from the content owner's server, plays it at the appropriate time and stores it for future reference in the event memory.

A device or system in which an embodiment of the present invention is deployed therefore allows for the media player's resources or the communication channel resources to be freed up for use by other tasks if necessary or simply to save power.

According to the invention, the notion of a "repeatable event", which was used above to describe advertisement material, may be extended to cover other events susceptible to being re-broadcast such as a classic film or a re-run of an already broadcast sporting event. In this case the repeatable event is considerably longer and comprises significantly more data than in the case where the repeatable event is an advertisement. Accordingly, at the time of manufacture or at a point of sale of a media player, the event memory of the media player is pre-loaded with one or more events having been identified as being susceptible to be broadcast more than once. A unique identifier corresponding to such a repeatable event is also stored in the media player in order that the repeatable event may be called or otherwise referenced. Consequently a player, in which is deployed an embodiment of the present invention, will be able to recognise, by looking at the EIT, that a future broadcast of a particular film for example is a repeatable event. Such a player will therefore be able to take advantage of the bandwidth savings and power savings afforded by the implementation of the invention by playing a preloaded version of the film if it exists in its event memory. If the film does not exist in the event memory, then it will be loaded into the event memory while the event is being played, thus making it available for re-play from the event memory should an encrypted tag with the event's unique ID be later detected in the EIT.

As mentioned above, the event information table in an MPEG transport stream (EIT) comprises information specific to future events and for the current event. According to another embodiment of the present invention the EIT comprises the encrypted tag described above, comprising the unique ID of an event to be broadcast in the future. Looking closer at this encrypted tag, it may be described as having two parts: a first part comprising an indication as to whether or not the next event to be broadcast is a repeatable event and a second part comprising the unique ID of that event. The first part can be in the form of a flag indicating whether or not the next event is a repeatable event. For example, the first part, next_is_repeatable_event is a flag which can be set to TRUE or FALSE depending on whether or not the next event is a repeatable event and the second part, Eventld is the unique ID of that event.

In more general terms, it can be said that the encrypted tag may comprise information more generally related to an event to be broadcast in the future. Instead of having a flag called next_is_repeatable_event, the encrypted tag has a flag called future_is_repeatable_event. In this case the tag has three parts: a first part comprising the flag future_is_repeatable_event, which can be set to TRUE or FALSE, a second part, Eventld, comprising the unique ID of the referenced future event and a third part, future_event_time, comprising an indication allowing for the time of broadcast of the referenced future event to be determined. Such an indication could be an absolute time or an offset time to be used in combination with a reference time to calculate the time of broadcast.

An embodiment of the present invention allows for the implementation of another feature which is particularly useful should the repeatable event be a film for example. In this embodiment the EIT comprises an encrypted further piece of information, referred to as an encrypted further tag. This further tag comprises information relative to the currently broadcast event. Again, this further tag has two parts: a first part comprising an indication of whether or not the currently broadcast event is a repeatable event and a second part comprising the unique ID of the event currently being broadcast. The first part can be in the form of a flag indicating whether or not the event is a repeatable event. For example, the first part, current_is_repeatable_event is a flag which can be set to TRUE or FALSE depending on whether or not the current event is a repeatable event and the second part, Eventld is the unique ID of the current event.

Consequently, in this embodiment of the present invention, if a viewer tunes to a service which is about to broadcast a film and that film has been identified by the service operator as being a repeatable event, then the viewer's equipment will be able to detect the TRUE status of the flag next_is_repeatable_event and the event's corresponding Eventld. Or if the film is repeatable and is to be broadcast at some other time in the future, then the TRUE status of the future_is_repeatable flag will be detected and the programmed broadcast time will be determined. The event memory will be searched for the corresponding Eventld and if it exists, then it will be retrieved and played at the broadcast time of the event having that unique ID instead of playing the version being broadcast. If the event does not exist in the event memory, then it will be played from the broadcast and stored in the event memory for future use.

On the other hand, if the viewer tunes to a service which is already broadcasting a film which has been identified as repeatable, then the viewer's apparatus will be able to detect the TRUE status of the flag current_is_repeatable. Thanks to the associated EventlD the event memory can be searched. If an event with that unique ID exists in the event memory, then it is played from the event memory rather than from the broadcast. In this case the viewer will be given the choice of playing the event in its entirety from the beginning since it is stored in the event memory or playing the event from the same place as it is being broadcast. In the case that the viewer chooses to view the complete event from the beginning, then the viewer's apparatus will indicate, on the display for example, that the event currently playing is being played from the event memory and is not synchronised with the version of the event being broadcast. This information is available to the device by virtue of the fact that the flag current_is_repeatable is TRUE AND the viewer has chosen to retrieve the current event from the event memory. The device can therefore display "PLAYBACK" for example.

If the event having the unique ID corresponding to the Eventld associated with a TRUE current_is_repeatable flag is not present in the event memory, then it is stored in the event memory from the current position. It follows then that a preceding portion of the event will be missing. Since the viewer's apparatus knows that the event having the unique ID corresponding to the Eventld of a TRUE current_is_repeatable is being stored in the event memory, it can store a command to re-record the event in its entirety the next time that same Eventld is detected as a next_is_repeatable or future_is_repeatable. Conversely, the apparatus may be programmed to prepend the partially stored event with the missing portion the next time it is broadcast. To do this, the player keeps track of the time corresponding to the current position mentioned above. The next time the event with the same Eventld is broadcast the viewer's apparatus stores the missing complement of the event up to the time corresponding to said current position. In embodiments of the present invention where the media player is connected to the server via at least a bidirectional communication channel, the media player can simply request the server to transmit the repeatable event in its entirety. In this way the media player does not have to wait for the current event to be played again in order to receive it in its entirety.

According to the present invention, if the user/viewer changes channel, then playing and/or recording of the repeatable event is aborted.

The ability to economize on communication bandwidth and on computing resources and thereby power consumption in a media device in which an embodiment of the present invention is deployed, is achieved thanks to appropriate management of the repeatable events stored or pre-stored in the event memory. According to the invention since the unique ID of the repeatable event is in encrypted format, only media players which are authorised to decrypt the tags in the EIT comprising the unique ID will be able to take advantage of the system and to enjoy the benefits thus rendered achievable. In practice, repeatable events are likely to occur in the form of advertising material. It is sometimes sought by malicious users to skip over advertising material and therefore the fact that the tags are encrypted precludes such a malicious user from being able to reconfigure a media player to simply skip over the repeatable events.

## Claims

1. A media player (MP) comprising:
a receiver (RX) to receive a digital media transmission (TS) from a server via a first channel (CH1), said digital media transmission (TS) comprising:
consumable content comprising a plurality of events including at least a current event (EV); and
a piece of programme specific information (EIT);
the media player (MP) further comprising:
a decryption module (DECR);
an event memory (MEM); and
a presentation module (DISP) to present at least the consumable content;
said media player (MP) **characterised in that** in combination:
the event memory (MEM) comprises at least one preloaded event being designated as a repeatable event (EV-R) and having a unique identifier (ID);
the piece of programme specific information (EIT) comprises an encrypted tag (TAG) comprising a unique identifier of a repeatable event; and
the media player (MP) is configured to:
present at least part of the current event (EV);
decrypt at least the unique identifier (ID) from the encrypted tag;
retrieve at least part of the repeatable event (EV-R) from the event memory should the decrypted unique identifier match the unique identifier (ID) of the preloaded repeatable event or else retrieve at least part of said repeatable event (EV-R) from the server; and
present the retrieved event.

2. The media player according to claim 1, wherein the consumable content is in encrypted format and is decrypted in the decryption module.

3. The media player of any of claims 1 or 2 wherein the media player is a portable device.

4. The media player of any of claims 1 to 3, wherein said encrypted tag further comprises a flag, said flag indicating that an event immediately following the current event in the digital media transmission is the repeatable event and wherein the media player is further configured to retrieve the repeatable event in its entirety from the server.

5. The media player according to any of claims 1 to 3, wherein the encrypted tag further comprises:
a flag, said flag indicating that an event following the current event in the digital media transmission is a repeatable event; and
a repeat index indicating a time when the repeatable event is to be presented; and wherein the media player is further configured to retrieve the repeatable event in its entirety from the server.

6. The media player according to any of claims 1 to 3, wherein the encrypted tag further comprises a flag, said flag indicating that the current event is the repeatable event.

7. The media player according to any of claims 1 to 6, wherein the first channel is bidirectional and said media player is configured to transmit commands to the server via the first channel.

8. The media player according to any of claims 1 to 6, wherein the media player comprises a second channel to communicate with the server, said second channel being bidirectional and being configured at least for transmission of commands from the media player to the server.

9. The media player according to claim 8, wherein the second media channel is further configured for transmission of the repeatable event from the server to the media player.

10. A method for playing events on a media player comprising a receiver configured to receive a digital media transmission from a server via a first channel, said digital media transmission comprising:
consumable content comprising a plurality of events including at least a current event; and
a piece of programme specific information comprising an encrypted tag including a unique identifier of a repeatable event;
said media player comprising:
a decryption module at least to decrypt the encrypted tag;
an event memory comprising at least one preloaded event, wherein the preloaded event is designated as a repeatable event and has a unique identifier; and
a presentation module to present at least the consumable content;
said method comprising:
presenting at least part of the current event;
decrypting at least the unique identifier from the encrypted tag;
retrieving at least part of the repeatable event from the event memory should the decrypted unique identifier match the unique identifier of the preloaded repeatable event or else retrieving at least part of said repeatable event from the server; and
presenting the retrieved event instead of the current event;
presenting the current event when the retrieved event has terminated.

11. The method according to claim 10, the method further comprising decrypting the consumable content in the decryption module.

12. The method according to either of claims 10 or 11, wherein the encrypted tag further comprises a continuation index indicating the end of the repeatable event; the method further comprising:
memorizing, in the media player, a current position of the current event;
presenting the current event from the current position after a time indicated by the continuation index.
